# EUROPÄISCHE PATENTSCHRIFT

(11) **EP 1 992 527 B1**
(45) Veröffentlichungstag und Bekanntmachung des Hinweises auf die Patenterteilung: **07.04.2010**
(21) Anmeldenummer: 08001159.6
(22) Anmeldetag: 23.01.2008
(51) Int. Cl.: B60R 21/34, B62D 25/12, E05B 65/19

(54) **Sicherheitseinrichtung für Fahrzeuge**
Safety device for vehicles
Dispositif de sécurité pour véhicules

(30) Priorität: 16.05.2007 DE 102007023137
(43) Veröffentlichungstag der Anmeldung: 19.11.2008
(73) Patentinhaber: AUDI AG, 85045 Ingolstadt (DE)
(72) Erfinder: Pickl, Richard, 85095 Denkendorf (DE); Eckert, Samuel, 52066 Aachen (DE)
(74) Vertreter: Engelhardt, Harald

(56) Entgegenhaltungen:
- DE-A1- 10 111 146
- DE-A1- 10 204 594
- DE-A1- 10 314 073
- DE-A1- 10 362 091
- DE-A1-102004 023 729
- DE-A1-102004 032 147
- DE-A1-102005 045 354

## Beschreibung

Die Erfindung bezieht sich auf eine Sicherheitseinrichtung für Fahrzeuge, mit einer Frontklappe, mit einem an der Frontklappe befestigten Schlossbügel und einem karosseriefest gelagerten Verriegelungshaken, wobei die Frontklappe von einer Schließstellung in eine angehobene und nach hinten verschobene Schutzstellung bewegbar ist, und wobei die Frontklappe in ihrem vorderen Bereich über einen Schwenkhebel angehoben und gehalten wird.

Das Dokument DE 103 62 091 A zeigt z.B. eine Schwenkhebelkonstruktion zum Anheben der Frontklappe.

Sicherheitseinrichtungen für Fahrzeuge, bei denen die Frontklappe von einer Schließstellung in eine angehobene und nach hinten verschobene Schutzstellung bewegbar ist, um einen verbesserten Fußgängerschutz zu erreichen, sind in vielfältigen Variationen bekannt. Die Bewegung der Frontklappe wird dabei meist über einen Aktuator ausgelöst, welcher auf ein im rückwärtigen Bereich der Frontklappe angeordnetes Scharnier einwirkt. Je nach Anordnung und Ausgestaltung der Frontklappenscharniere wird im Zusammenhang mit weiteren Maßnahmen im vorderen Bereich der Frontklappe erreicht, dass nicht nur der rückwärtige Bereich der Frontklappe, sondern auch der vordere Bereich der Frontklappe angehoben werden. Durch diese Maßnahme wird erreicht, dass der gesetzlich vorgeschriebene Mindestabstand zu Festbauteilen im Motorraum nach der Auslösung der Sicherheitseinrichtung gewährleistet ist.

Der vorliegenden Erfindung liegt die Aufgabe zugrunde, eine gattungsgemäße Sicherheitseinrichtung so weiter zu bilden, dass durch besonders einfache Maßnahmen der vordere Bereich der Frontklappe bei Auslösung der Sicherheitseinrichtung um einen vorgegebenen Betrag angehoben wird. Außerdem soll das System vollständig reversibel sein, um nach einer Fehlauslösung den Ausgangszustand herstellen zu können.

Die Aufgabe wird dadurch gelöst, dass der zur Anhebung der Frontklappe vorgesehene Schwenkhebel in seinem vorderen Bereich eine Aufnahmeöffnung für den an der Frontklappe befestigten Schlossbügel aufweist, dass in Fahrtrichtung des Fahrzeuges gesehen die Aufnahmeöffnung hinter einem etwa waagerechten Abschnitt des Schlossbügels angeordnet ist und dass die Achse des Schwenkhebels zu der anfänglichen Bewegungsrichtung der Frontklappe bei ihrer Bewegung in die Schutzstellung versetzt angeordnet ist, derart, dass der waagerechte Abschnitt des Schlossbügels im Bewegungsablauf in die Aufnahmeöffnung des Schwenkhebels eingreift und darüber den Schwenkhebel und damit den vorderen Abschnitt der Frontklappe aufstellt. Durch die erfindungsgemäße Lösung kann bei nicht aktivierter Sicherheitseinrichtung eine ganz herkömmliche Verriegelung für die Frontklappe mit einem Schlossbügel und einem Verriegelungshaken Verwendung finden. Erst wenn durch die Sicherheitseinrichtung die Frontklappe nach hinten verschoben wird, greift der Schlossbügel in den Schwenkhebel ein. Im weiteren Bewegungsablauf zieht der Schlossbügel den Schwenkhebel schräg nach oben hinten und stellt dadurch den vorderen Bereich der Frontklappe auf. Der Ausstellbetrag wird dabei durch die Lagerstelle und durch die Schwenkhebellänge bestimmt.

Durch die neue Lösung wird nicht nur mit wenigen Bauteilen eine zuverlässige Anhebung des vorderen Frontklappenabschnitts erreicht, sondern auch ein reversibles System zur Verfügung gestellt. Bei einer Fehlauslösung kann durch einfaches manuelles Drücken der Frontklappe diese wieder in die Ausgangsstellung zurück bewegt werden.

Besonders vorteilhaft ist, wenn in der Schutzstellung der Frontklappe der von der Aufnahmeöffnung des Schwenkhebels umgriffene Schlossbügel hinter der Achse des Schwenkhebels angeordnet ist. Dadurch wird erreicht, dass auch bei hohen Kräften auf den vorderen Bereich der Frontklappe diese nicht in die Ausgangsstellung zurückkehrt. Dies ist erst über eine Verschiebebewegung möglich, um bspw. bei einer Fehlauslösung das System in die Ausgangslage zurück zu bringen. Die beschriebene Funktion kann in einfacher Weise dadurch erreicht werden, dass der Schwenkhebel eine entsprechend gekrümmte Form aufweist.

Eine besonders vorteilhafte Ausführungsform der Erfindung besteht darin, dass die Aufnahmeöffnung des Schwenkhebels kreisrund ist, dass der Aufnahmeöffnung eine Einführöffnung vorgelagert ist, dass die Einführöffnung einen gegenüber der Aufnahmeöffnung reduzierten Querschnitt aufweist, und dass der waagerechte Abschnitt des Schlossbügels einen an die Einführöffnung und die Aufnahmeöffnung angepassten Querschnitt aufweist, derart, dass bei der anfänglichen Zurückbewegung der Frontklappe der waagerechte Abschnitt des Schlossbügels die Einführöffnung passieren kann und bei angehobener Frontklappe und aufgestelltem Schwenkhebel der Schlossbügel in dem Schwenkhebel formschlüssig gehalten ist. Durch die formschlüssige Sicherung des Schlossbügels im Schwenkhebel ist gewährleistet, dass bei angehobener Frontklappe auch deren vorderer Bereich am Fahrzeug fixiert ist. Bei dem Aufschlag eines Fußgängers oder Zweiradfahrers auf die Frontklappe wird zwar eine nach unten gerichtete Kraft auf die Frontklappe ausgeübt; es kann jedoch nicht ausgeschlossen werden, dass im weiteren Unfallverlauf Kräfte auftreten, durch die eine ungesicherte Frontklappe freikommt.

Der Patentanspruch 4 kennzeichnet eine besonders einfache Lösung, durch die bei angehobener Frontklappe eine formschlüssige Sicherung zwischen Schlossbügel und Schwenkhebel erreicht werden kann.

Vorteilhaft ist, wenn ein Abschnitt des Schwenkhebels gezielt als Deformationselement ausgebildet ist, welches sich ab einer vorbestimmten Kraft plastisch verformt. Dadurch wird durch den Schwenkhebel nicht nur ein zusätzlicher Verformungsweg für die Frontklappe geschaffen, sondern der Schwenkhebel selbst bildet darüber hinaus ein Bauteil, welches einen Teil der Aufprallenergie umwandeln kann. Eine konkrete Ausgestaltung eines derartigen Deformationselements ist Gegenstand des Patentanspruchs 6.

Gemäß einer vorteilhaften Ausgestaltung der Erfindung kann sich im unteren Bereich der Aufnahmeöffnung an den Schwenkhebel ein Fortsatz anschließen, auf dem der waagerechte Abschnitt des Schlossbügels bei geschlossener Frontklappe aufliegt und welcher bei Bewegung der Frontklappe in ihre Schutzstellung den waagerechten Abschnitt des Schlossbügels der Aufnahmeöffnung zuführt. Durch den waagerechten Fortsatz ist toleranzunabhängig gewährleistet, dass der waagerechte Abschnitt des Schlossbügels zuverlässig in die Aufnahmeöffnung gelangt, wenn die Frontklappe in die Schutzstellung bewegt wird.

Eine verbesserte Führung des Schwenkhebels kann dadurch erreicht werden, dass der Verriegelungshaken einen Schlitz aufweist, der den Fortsatz des Schwenkhebels aufnimmt. Insofern sind an sich zwei Verriegelungshaken gebildet, die zu beiden Seiten des Schwenkhebels angeordnet sind.

In der vorstehenden Beschreibung ist stets auf die Ausbildung nur eines Schwenkhebels in Verbindung mit einem Verriegelungshaken abgestellt. Zweckmäßig ist jedoch, wenn auf jeder Seite der Frontklappe ein Schwenkhebel befestigt ist, welcher mit zugeordneten Verriegelungshaken zusammen wirkt.

Ein Ausführungsbeispiel der Erfindung ist in der Zeichnung dargestellt. Es zeigt
- Figur 1: in Seitenansicht eine Frontklappe mit einem Schlossbügel, einem Verriegelungshaken und einem Schwenkhebel in einer Stellung, in der die Frontklappe geschlossen und nach Betätigung des Verriegelungshakens geöffnet werden kann;
- Figur 2: die Verriegelungseinrichtung aus Figur 1 ohne Frontklappe in perspektivischer Darstellung;
- Figur 3: eine weitere perspektivische Darstellung, ähnlich derjenigen in Figur 2;
- Figur 4: die Anordnung aus Figur 1 in einer Stellung, bei der die Frontklappe nach hinten verschoben ist und deren Schlossbügel in eine Aufnahmeöffnung des Schwenkhebels eingreift;
- Figur 5: die Situation gemäß Figur 4 in perspektivischer Darstellung ohne Frontklappe;
- Figur 6: eine Draufsicht auf die Darstellung in Figur 5;
- Figur 7: die Anordnung gemäß Figur 4 im weiteren Bewegungsablauf, wobei der Schwenkhebel die Frontklappe teilweise angehoben hat;

- Figur 8: eine Detaildarstellung des Schwenkhebels und des Schlossbügels aus Figur 7;
- Figur 9: eine vergrößerte, perspektivische Darstellung gemäß Figur 8 und
- Figur 10: den Schwenkhebel und die Frontklappe in einer angehobenen Stellung, in der eine Sicherheitseinrichtung für einen aufschlagenden Fußgänger gebildet ist.

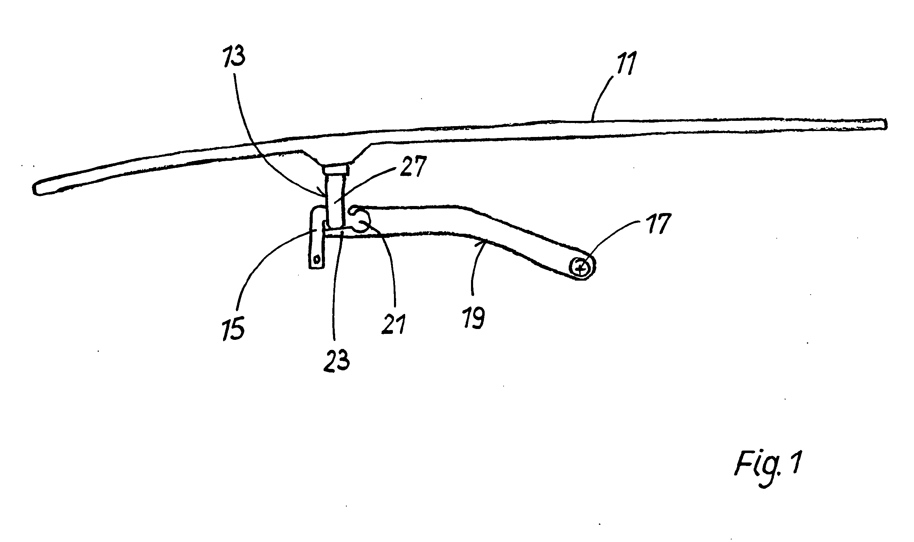

Die Figuren 1 bis 10 stellen ein einziges Ausführungsbeispiel einer Sicherheitseinrichtung in verschiedenen Bewegungsphasen und in verschiedenen Ansichten dar.

In den vorderen seitlichen Bereichen einer Frontklappe 11 sind zwei Schlossbügel 13 befestigt, welche mit zugeordneten Verriegelungshaken 15 zusammenwirken. Da die Bauteile spiegelbildlich ausgeführt sind, wird nachfolgend stets nur auf eine Anordnung Bezug genommen.

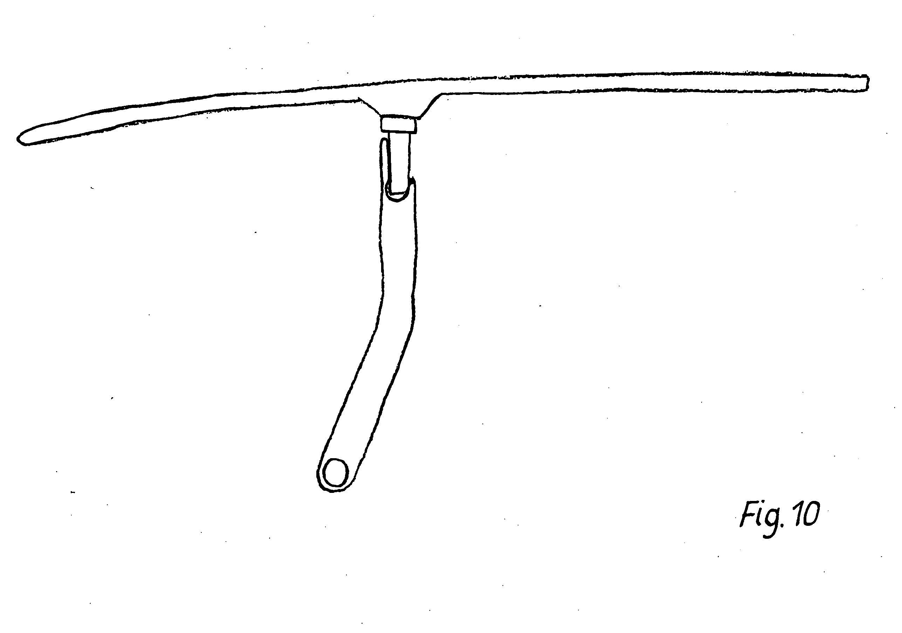

Neben der Verriegelungsvorrichtung mit dem Schlossbügel 13, dem Verriegelungshaken 15 und einer nicht gezeigten Betätigungseinrichtung für den Verriegelungshaken 15 ist eine Sicherheitseinrichtung vorgesehen, durch welche die Frontklappe 11 von der in Figur 1 gezeigten Ausgangslage in eine angehobene und nach hinten verschobene Schutzstellung bewegbar ist, wie dies Figur 10 zeigt. Zur Bewegung der Frontklappe 11 in die Schutzstellung ist in dem nicht gezeigten rückwärtigen Bereich der Frontklappe 11 ein Viergelenkscharnier vorgesehen, an dem ein sensorgesteuerter Aktuator angreift. Durch den Aktuator lässt sich die Frontklappe 11 in ihrem rückwärtigen Bereich um einen bestimmten Betrag zurück und gleichzeitig nach oben bewegen.

Zur Anhebung des vorderen Bereiches der Frontklappe 11 ist ein um eine Achse 17 drehbarer Schwenkhebel 19 vorgesehen. Der gekröpft ausgebildete Schwenkhebel 19 weist in seinem vorderen Endbereich eine Aufnahmeöffnung 21 und einen sich daran nach vorne anschließenden Fortsatz 23 auf.

In der in Figur 1 dargestellten Ausgangslage, also derjenigen Lage, in der die Frontklappe 11 wie gezeigt geschlossen und nach Betätigung des Verriegelungshakens 15 geöffnet werden kann, liegt der Schlossbügel 13 auf dem Fortsatz 23 auf.

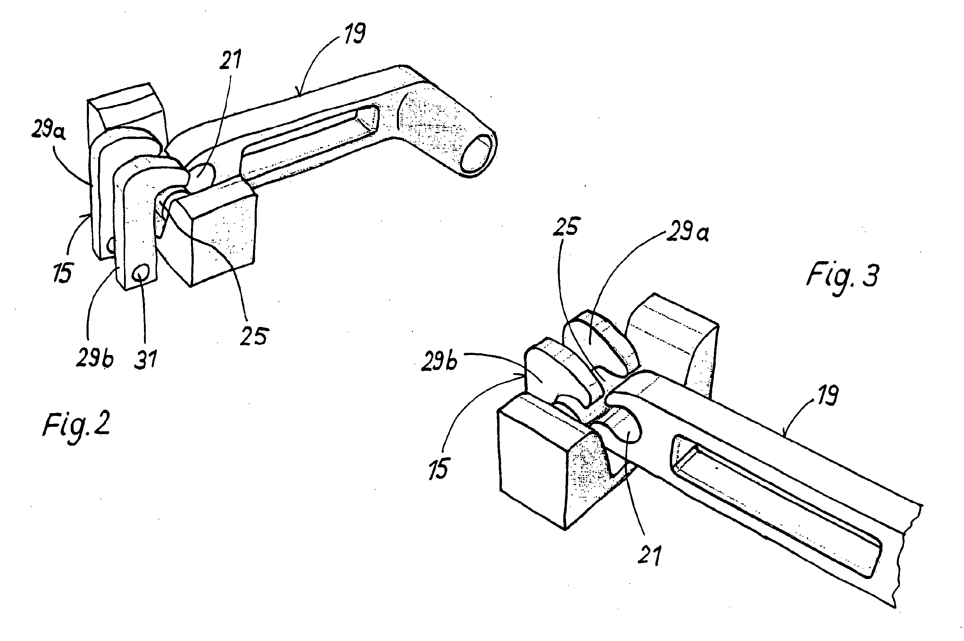

Zur Verdeutlichung der Ausgangslage sind in den Figuren 2 und 3 der Schwenkhebel 19, der Verriegelungshaken 15 und der waagerechte Abschnitt 25 des Schlossbügels 13 perspektivisch dargestellt. An den waagerechten Abschnitt 25 des Schlossbügels 13 schließen sich nach oben hin die in Figur 1 erkennbaren senkrechten Abschnitte des Schlossbügels 13 an, so dass dieser eine insgesamt U-förmige Gestalt hat. In den Figuren 2 und 3 sind die senkrechten Abschnitte 27 des Schlossbügels 13 weggelassen. Diese Figuren zeigen jedoch sehr deutlich, dass der Verriegelungshaken 15 an sich durch zwei Haken 29a, 29b gebildet ist, welche über einen Bolzen 29 verbunden sind. Die Haken 29a und 29b nehmen zwischen sich den am Schwenkhebel 19 angeformten Fortsatz 23 auf, so dass dieser in der Ausgangslage seitlich fixiert ist.

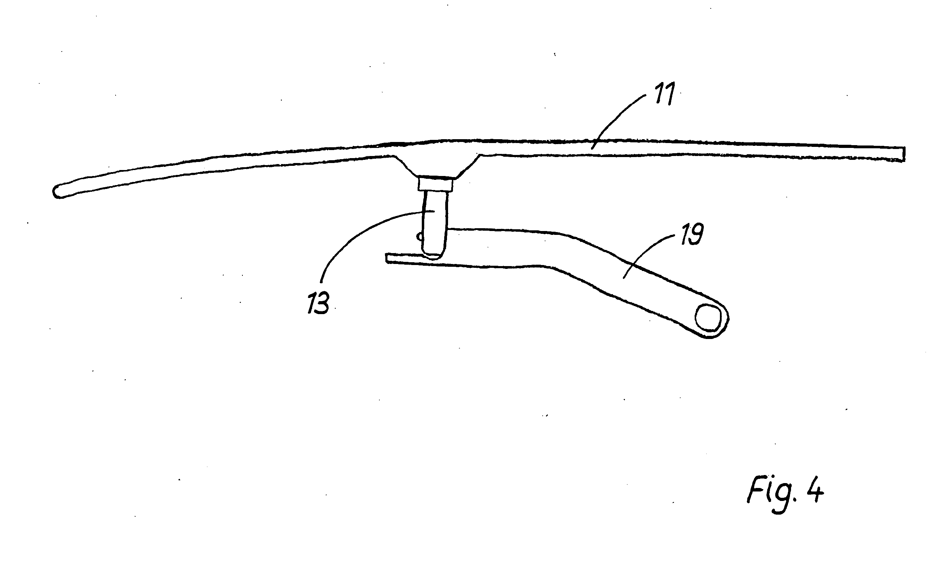

Figur 4 zeigt die Stellung der Frontklappe 11 nach dem Auslösen der Sicherheitseinrichtung, welche die Frontklappe 11 zunächst um einen vorgegebenen Betrag nach hinten zieht. Dadurch gelangt der Schlossbügel 13 bis auf Anschlag in die Aufnahmeöffnung 21 des Schwenkhebels 19. Der Fortsatz 23 des Schwenkhebels 19 dient dabei als Führung. Zur Verdeutlichung zeigt die Figur 4 nur die Frontklappe 11, den Schlossbügel 13 und den Schwenkhebel 19. Der Verriegelungshaken 15 ist weggelassen.

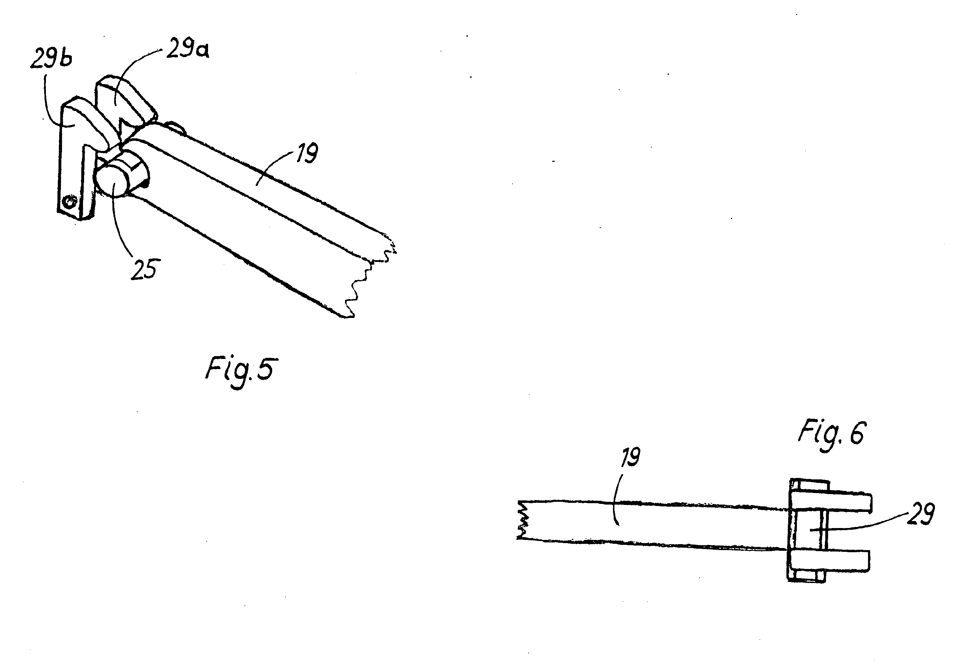

Die Situation in der anfänglichen Bewegungsphase ist außerdem perspektivisch in den Figuren 5 und 6 wiedergegeben. Da dort auch der Verriegelungshaken 15 bzw. die Haken 29a und 29b dargestellt sind, ist zu erkennen, dass in dieser ersten Bewegungsphase der waagerechte Abschnitt 25 des Schlossbügels 13 außer Eingriff mit den Haken 29a und 29b kommt und von der Aufnahmeöffnung 21 des Schwenkhebels 19 umgriffen wird.

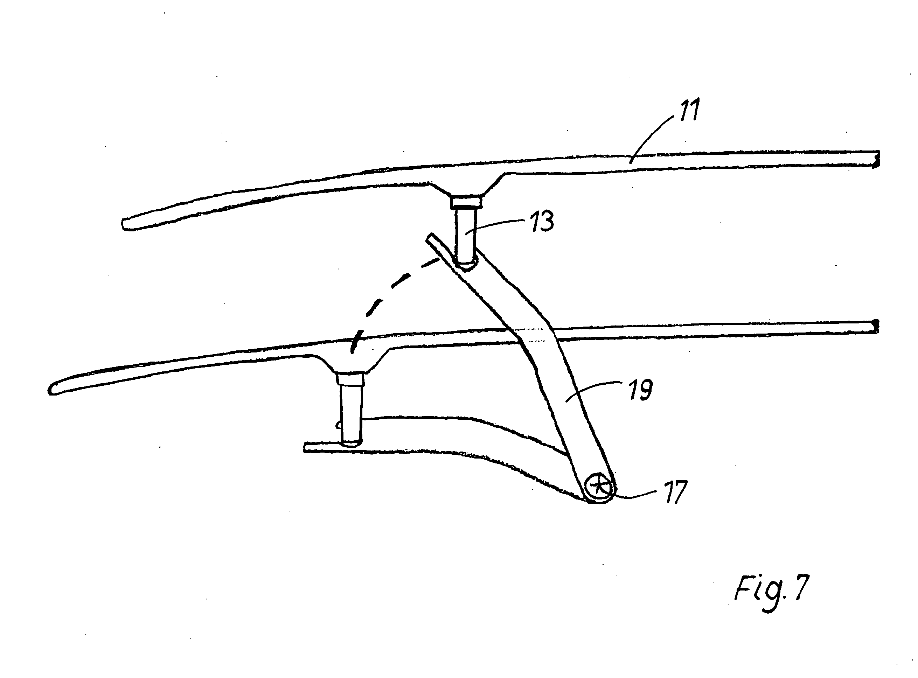

In dem in Figur 7 dargestellten weiteren Bewegungsablauf wird die Frontklappe 11 weiter nach hinten gezogen. Da der Schlossbügel 13 über die Aufnahmeöffnung 21 des Schwenkhebels 19 verbunden ist, erfolgt gleichzeitig eine Schwenkbewegung des Schwenkhebels 19 um dessen Achse 17, wodurch die Frontklappe 11 in ihrem vorderen Bereich angehoben wird.

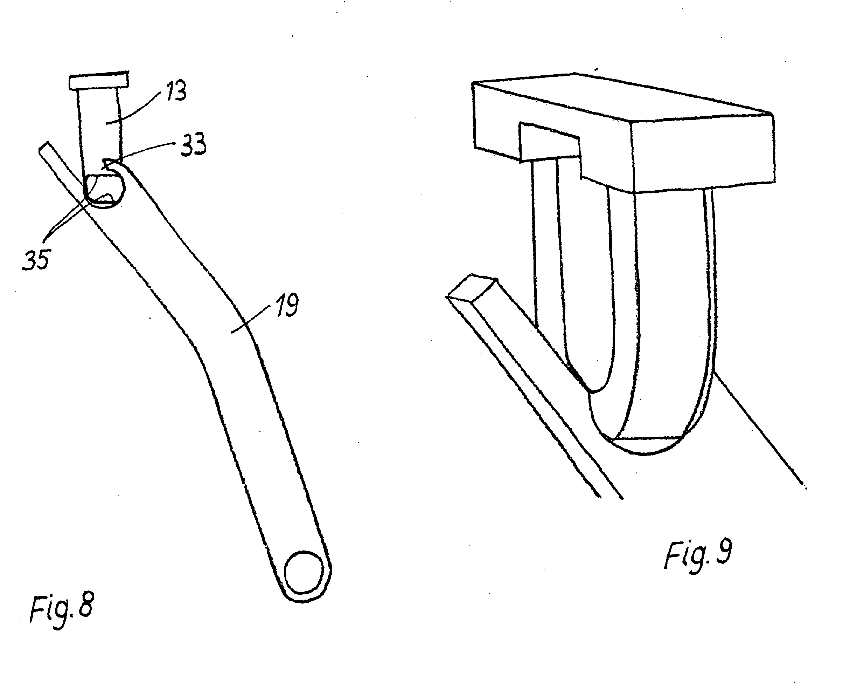

Die in Figur 7 wiedergegebene Bewegungsphase ist detailliert in Figur 8 und perspektivisch in Figur 9 wiedergegeben. In der Seitenansicht gemäß Figur 8 ist deutlich zu erkennen, dass der Aufnahmeöffnung 21 des Schwenkhebels 19 eine Einführöffnung 33 vorgelagert ist, welche eine kleinere lichte Weite als die Aufnahmeöffnung 21 aufweist. Entsprechend dem lichten Maß der Einführöffnung 33 ist der waagerechte Abschnitt 25 des Schlossbügels 13 mit Abflachungen 35 versehen. Durch diese Ausgestaltung ist es möglich, dass in der ersten Bewegungsphase (siehe Figur 4) der waagerechte Abschnitt 25 des Schlossbügels 13 durch die Einführöffnung 33 in die Aufnahmeöffnung 21 hineingleiten kann. Im weiteren Bewegungsablauf (z.B. gemäß Figur 8) stellt die gewählte Ausgestaltung einen Formschluss zwischen dem Schlossbügel 13 und dem Schwenkhebel 19 sicher.

Schließlich ist in Figur 10 die Frontklappe 11 in der Schutzstellung gezeigt, d.h. diejenige Stellung, in der ein verbesserter Schutz für einen auf die Frontklappe aufschlagenden Fußgänger oder Zweiradfahrer gegeben ist. In dieser Stellung nimmt der Schwenkhebel 19 eine etwa senkrechte Position ein. Dabei ist der Schlossbügel 13 gegenüber der Achse 17 des Schwenkhebels 19 nach hinten versetzt, wodurch sichergestellt ist, dass beim Aufschlag einer Person auf die Frontklappe 11 diese sich nicht schließt, sondern in ihrer Schutzstellung verbleibt.

Das Schließen der Frontklappe 11 kann bei einer Fehlauslösung der Sicherheitseinrichtung in einfacher Weise dadurch erfolgen, dass die Frontklappe 11 von Hand in ihre Ausgangslage zurück bewegt wird. Dabei drückt der Schlossbügel 13 den federbelasteten Verriegelungshaken 15 zur Seite und rastet anschließend ein.

## Patentansprüche

1. Sicherheitseinrichtung für Fahrzeuge, mit einer Frontklappe, mit einem an der Frontklappe befestigten Schlossbügel und einem karosseriefest gelagerten Verriegelungshaken, wobei die Frontklappe von einer Schließstellung in eine angehobene und nach hinten verschobene Schutzstellung bewegbar ist, und wobei die Frontklappe in ihrem vorderen Bereich über einen Schwenkhebel angehoben und gehalten wird, **dadurch gekennzeichnet, dass** der Schwenkhebel (19) in seinem vorderen Bereich eine Aufnahmeöffnung (21) für den Schlossbügel (13) aufweist, dass in Fahrtrichtung des Fahrzeuges gesehen die Aufnahmeöffnung (21) hinter einem etwa waagerechten Abschnitt (25) des Schlossbügels (13) angeordnet ist, und dass die Achse (17) des Schwenkhebels (19) zu der anfänglichen Bewegungsrichtung der Frontklappe (11) bei ihrer Bewegung in die Schutzstellung versetzt angeordnet ist, derart, dass der waagerechte Abschnitt (25) des Schlossbügels (13) im Bewegungsablauf in die Aufnahmeöffnung (21) des Schwenkhebels (19) eingreift und darüber den Schwenkhebel (19) und damit den vorderen Abschnitt der Frontklappe (11) aufstellt.

2. Sicherheitseinrichtung nach Anspruch 1, **dadurch gekennzeichnet, dass** in der Schutzstellung der Frontklappe (11) der von der Aufnahmeöffnung (21) des Schwenkhebels (19) umgriffene Schlossbügel (13) hinter der Achse (17) des Schwenkhebels (19) angeordnet ist.

3. Sicherheitseinrichtung nach Anspruch 1 oder 2, **dadurch gekennzeichnet, dass** die Aufnahmeöffnung (21) des Schwenkhebels (19) kreisrund ist, dass der Aufnahmeöffnung (21) eine Einführöffnung (33) vorgelagert ist, dass die Einführöffnung (33) einen gegenüber der Aufnahmeöffnung (21) reduzierten Querschnitt aufweist, und dass der waagerechte Abschnitt (25) des Schlossbügels (13) einen an die Einführöffnung (33) und die Aufnahmeöffnung (21) angepassten Querschnitt aufweist, derart, dass bei der anfänglichen Zurückbewegung der Frontklappe (11) der waagerechte Abschnitt (25) des Schlossbügels (13) die Einführöffnung (33) passieren kann und bei angehobener Frontklappe (11) und aufgestelltem Schwenkhebel (19) der Schlossbügel (13) in dem Schwenkhebel (19) formschlüssig gehalten ist.

4. Sicherheitseinrichtung nach Anspruch 3, **dadurch gekennzeichnet, dass** der waagerechte Abschnitt (25) des Schlossbügels (13) kreisrunden Querschnitt mit mindestens einer waagerechten Abflachung (35) aufweist.

5. Sicherheitseinrichtung nach einem der Ansprüche 1 bis 4, **dadurch gekennzeichnet, dass** ein Abschnitt des Schwenkhebels (19) gezielt als Deformationselement ausgebildet ist, welches sich ab einer vorbestimmten Kraft plastisch verformt.

6. Sicherheitseinrichtung nach Anspruch 5, **dadurch gekennzeichnet, dass** das Deformationselement durch einen Längsschlitz in dem Schwenkhebel (19) gebildet ist.

7. Sicherheitseinrichtung nach einem der Ansprüche 1 bis 6, **dadurch gekennzeichnet, dass** sich im unteren Bereich der Aufnahmeöffnung (21) an den Schwenkhebel ein Fortsatz (23) anschließt, auf dem der waagerechte Abschnitt (25) des Schlossbügels (13) bei geschlossener Frontklappe (11) aufliegt und welcher bei Bewegung der Frontklappe (11) in ihre Schutzstellung den waagerechten Abschnitt (25) des Schlossbügels (13) der Aufnahmeöffnung (21) zuführt.

8. Sicherheitseinrichtung nach Anspruch 7, **dadurch gekennzeichnet, dass** der Fortsatz (23) und/oder die untere Fläche des Schwenkhebels (19) bei geschlossener Frontklappe (11) auf einem karosseriefesten Anschlagteil aufliegen.

9. Sicherheitseinrichtung nach Anspruch 7 oder 8, **dadurch gekennzeichnet, dass** der Verriegelungshaken (15) einen den Fortsatz (23) des Schwenkhebels (19) aufnehmenden Schlitz aufweist.

10. Sicherheitseinrichtung nach Anspruch 8 oder 9, **dadurch gekennzeichnet, dass** der Verriegelungshaken (15) an dem karosseriefesten Anschlagteil gelagert ist.

11. Sicherheitseinrichtung nach einem der Ansprüche 1 bis 10, **dadurch gekennzeichnet, dass** auf jeder Seite der Frontklappe (11) ein Schwenkhebel (19) befestigt ist, welcher mit einem zugeordneten Verriegelungshaken (15) zusammenwirkt.

## Claims

1. Safety device for vehicles, having a bonnet, having a lock bar fastened to the bonnet and having a locking hook mounted fixedly with respect to a body, with it being possible for the bonnet to be moved from a closed position into a raised, rearwardly displaced protection position, and wherein the bonnet is raised and held in its front region by means of a pivoting lever, **characterized in that** the pivoting lever (19) has, in its front region, a receiving opening (21) for the lock bar (13), **in that**, as viewed in the direction of travel of the vehicle, the receiving opening (21) is arranged behind an approximately horizontal portion (25) of the lock bar (13), and **in that** the axis (17) of the pivoting lever (19) is arranged offset with respect to the initial movement direction of the bonnet (11) during its movement into the protection position, in such a way that, during the course of the movement, the horizontal portion (25) of the lock bar (13) engages into the receiving opening (21) of the pivoting lever (19) and in this way deploys the pivoting lever (19) and therefore the front portion of the bonnet (11).

2. Safety device according to Claim 1, **characterized in that,** in the protection position of the bonnet (11), the lock bar (13) which is engaged around by the receiving opening (21) of the pivoting lever (19) is arranged behind the axis (17) of the pivoting lever (19).

3. Safety device according to Claim 1 or 2, **characterized in that** the receiving opening (21) of the pivoting lever (19) is circular, **in that** an insertion opening (33) is positioned in front of the receiving opening (21), **in that** the insertion opening (33) has a reduced cross section in relation to the receiving opening (21), and **in that** the horizontal portion (25) of the lock bar (13) has a cross section matched to the insertion opening (33) and to the receiving opening (21), in such a way that, during the initial rearward movement of the bonnet (11), the horizontal portion (25) of the lock bar (13) can pass the insertion opening (33), and when the bonnet (11) is raised and the pivoting lever (19) deployed, the lock bar (13) is held in the pivoting lever (19) in a positively locking manner.

4. Safety device according to Claim 3, **characterized in that** the horizontal portion (25) of the lock bar (13) has a circular cross section with at least one horizontal flattened portion (35).

5. Safety device according to one of Claims 1 to 4, **characterized in that** a portion of the pivoting lever (19) is purposely designed as a deformation element which plastically deforms above a predetermined force.

6. Safety device according to Claim 5, **characterized in that** the deformation element is formed by a longitudinal slot in the pivoting lever (19).

7. Safety device according to one of Claims 1 to 6, **characterized in that**, in the lower region of the receiving opening (21), the pivoting lever is adjoined by an extension (23) on which the horizontal portion (25) of the lock bar (13) rests when the bonnet (11) is closed and which, during the movement of the bonnet (11) into its protection position, guides the horizontal portion (25) of the lock bar (13) to the receiving opening (21).

8. Safety device according to Claim 7, **characterized in that** the extension (23) and/or the lower surface of the pivoting lever (19) rest on a stop part, which is fixed with respect to the body, when the bonnet (11) is closed.

9. Safety device according to Claim 7 or 8, **characterized in that** the locking hook (15) has a slot which receives the extension (23) of the pivoting lever (19).

10. Safety device according to Claim 8 or 9, **characterized in that** the locking hook (15) is mounted on the stop part which is fixed with respect to the body.

11. Safety device according to one of Claims 1 to 10, **characterized in that** a pivoting lever (19) is fastened to each side of the bonnet (11) and interacts with an associated locking hook (15).

## Revendications

1. Dispositif de sécurité pour véhicules, comprenant un volet avant, une bride de serrure fixée au volet avant et un crochet de verrouillage monté fixement sur la carrosserie, le volet avant pouvant être déplacé depuis une position de fermeture dans une position de protection soulevée et décalée vers l'arrière, et le volet avant étant soulevé et maintenu dans sa partie avant par le biais d'un levier pivotant, **caractérisé en ce que** le levier pivotant (19) présente, dans sa partie avant, une ouverture de réception (21) pour la bride de serrure (13), **en ce que**, vu dans la direction d'avance du véhicule, l'ouverture de réception (21) est disposée derrière une portion approximativement horizontale (25) de la bride de serrure (13), et **en ce que** l'axe (17) du levier pivotant (19) est disposé de manière décalée par rapport à la direction de déplacement initiale du volet avant (11) lors de son déplacement dans la position de protection, de telle sorte que la portion horizontale (25) de la bride de serrure (13) vienne en prise, dans le déroulement de son déplacement, dans l'ouverture de réception (21) du levier pivotant (19), et positionne par-dessus le levier pivotant (19) et de ce fait la portion avant du volet avant (11).

2. Dispositif de sécurité selon la revendication 1, **caractérisé en ce que** dans la position de protection du volet avant (11), la bride de serrure (13) en prise dans l'ouverture de réception (21) du levier pivotant (19) est disposée derrière l'axe (17) du levier pivotant (19).

3. Dispositif de sécurité selon la revendication 1 ou 2, **caractérisé en ce que** l'ouverture de réception (21) du levier pivotant (19) est ronde circulaire, **en ce qu'**avant l'ouverture de réception (21) est montée une ouverture d'insertion (33), **en ce que** l'ouverture d'insertion (33) présente une section transversale réduite par rapport à l'ouverture de réception (21), et **en ce que** la portion horizontale (25) de la bride de serrure (13) présente une section transversale adaptée à l'ouverture d'insertion (33) et à l'ouverture de réception (21), de telle sorte que lors du mouvement de retour initial du volet avant (11), la portion horizontale (25) de la bride de serrure (13) puisse passer par l'ouverture d'insertion (33) et que lorsque le volet avant (11) est soulevé, et que le levier pivotant (19) est positionné, la bride de serrure (13) soit maintenue par engagement par correspondance géométrique dans le levier pivotant (19).

4. Dispositif de sécurité selon la revendication 3, **caractérisé en ce que** la portion horizontale (25) de la bride de serrure (13) présente une section transversale ronde circulaire avec au moins un méplat horizontal (35).

5. Dispositif de sécurité selon l'une quelconque des revendications 1 à 4, **caractérisé en ce qu'**une portion du levier pivotant (19) est réalisée de manière spécifique sous forme d'élément de déformation, qui se déforme plastiquement à partir d'une force prédéfinie.

6. Dispositif de sécurité selon la revendication 5, **caractérisé en ce que** l'élément de déformation est formé par une fente longitudinale dans le levier pivotant (19).

7. Dispositif de sécurité selon l'une quelconque des revendications 1 à 6, **caractérisé en ce qu'**une saillie (23) se raccorde au levier pivotant dans la partie inférieure de l'ouverture de réception (21), la portion horizontale (25) de la bride de serrure (13) reposant sur cette saillie lorsque le volet avant (11) est fermé et cette saillie amenant la portion horizontale (25) de la bride de serrure (13) dans l'ouverture de réception (21) lors du déplacement du volet avant (11) dans sa position de protection.

8. Dispositif de sécurité selon la revendication 7, **caractérisé en ce que** la saillie (23) et/ou la surface inférieure du levier pivotant (19) reposent sur une partie de butée fixée à la carrosserie lorsque le volet avant (11) est fermé.

9. Dispositif de sécurité selon la revendication 7 ou 8, **caractérisé en ce que** le crochet de verrouillage (15) présente une fente recevant la saillie (23) du levier pivotant (19).

10. Dispositif de sécurité selon la revendication 8 ou 9, **caractérisé en ce que** le crochet de verrouillage (15) est monté sur la partie de butée fixée à la carrosserie.

11. Dispositif de sécurité selon l'une quelconque des revendications 1 à 10, **caractérisé en ce que** de chaque côté du volet avant (11) est fixé un levier pivotant (19), qui coopère avec un crochet de verrouillage (15) associé.
